# EUROPÄISCHE PATENTSCHRIFT

(11) **EP 2 715 837 B1**
(45) Veröffentlichungstag und Bekanntmachung des Hinweises auf die Patenterteilung: **27.04.2016**
(21) Anmeldenummer: 12726401.8
(22) Anmeldetag: 31.05.2012
(51) Int. Cl.: H01M 2/10, H01M 2/20

(54) **DECKEL FÜR EINE ELEKTROCHEMISCHE VORRICHTUNG**
COVER FOR AN ELECTROCHEMICAL DEVICE
COUVERCLE POUR DISPOSITIF ÉLECTROCHIMIQUE

(30) Priorität: 01.06.2011 DE 102011076889
(43) Veröffentlichungstag der Anmeldung: 09.04.2014
(73) Patentinhaber: ElringKlinger AG, 72581 Dettingen (DE); Bayerische Motoren Werke Aktiengesellschaft, 80809 München (DE)
(72) Erfinder: LADERER, Mark, 72582 Grabenstetten (DE); FRITZ, Wolfgang, 72555 Metzingen (DE); GOESMANN, Hubertus, 89564 Auernheim (DE); HAUCK, Axelle, 85579 Neubiberg (DE); ZACHAR, Christian, 82194 Gröbenzell (DE)
(74) Vertreter: Hoeger, Stellrecht & Partner Patentanwälte mbB
(86) Internationale Anmeldenummer: PCT/EP2012/060308
(87) Internationale Veröffentlichungsnummer: WO 2012/164042

(56) Entgegenhaltungen:
- EP-A1- 2 026 387
- DE-A1- 3 544 003
- DE-A1-102010 035 114
- DE-C- 833 517

## Beschreibung

Die vorliegende Erfindung betrifft einen Deckel für eine elektrochemische Vorrichtung, die mehrere elektrochemische Zellen umfasst.

Derzeit bekannte Zellkontaktierungssysteme für elektrochemische Vorrichtungen umfassen eine in einem Spritzgießverfahren hergestellte, relativ dicke Abdeckplatte aus einem Polypropylenmaterial.

Die DE 10 2010 035 114 A1 offenbart eine Batterieeinheit mit mehreren elektrochemischen Zellen und einem Deckel, wobei der Deckel ein Trägerelement umfasst, an dem mehrere Zellverbinder angeordnet sind, und ein Abdeckelement, durch welches die Zellverbinder abgedeckt sind. Das Abdeckelement besteht aus einer festen Platte, welche aus einem isolierenden synthetischen Harz gebildet ist.

Die DE 833 517 C offenbart eine Schutzkappe für elektrische Sammler und Sammlerbatterien, die aus Weichgummi oder einem anderen Material mit weichgummiähnlichen Eigenschaften besteht.

Die DE 35 44 003 A1 offenbart einen Batteriedeckel für eine Bleiakkumulator-Batterie.

Die EP 2 026 387 A1 offenbart eine plattenförmige Wärmesenke und eine Wärmeleitfolie, die zusammen einen Deckel für eine elektrochemische Vorrichtung bilden. Die elektrochemische Vorrichtung umfasst mehrere elektrochemische Zellen. Die Wärmesenke bildet ein Trägerelement, an dem ein Zellverbinder zum elektrisch leitenden Verbinden eines ersten Zellterminals einer ersten elektrochemischen Zelle und eines zweiten Zellterminals einer zweiten elektrochemischen Zelle angeordnet ist. Die Wärmeleitfolie bildet ein Abdeckelement zum Abdecken des Zellverbinders, welches eine Abdeckfolie umfasst.

Der vorliegenden Erfindung liegt die Aufgabe zugrunde, ein Zellkontaktierungssystem für eine elektrochemische Vorrichtung zu schaffen, welches ein reduziertes Gewicht aufweist und dennoch eine hohe Sicherheit gegen Beschädigungen aufweist.

Diese Aufgabe wird durch einen Deckel für eine elektrochemische Vorrichtung nach Anspruch 1 gelöst.

Vorzugsweise ist das Abdeckelement im Wesentlichen vollständig als eine Abdeckfolie ausgebildet.

Unter einer Folie wird dabei in der vorliegenden Beschreibung und in den beigefügten Ansprüchen ein flächiges Gebilde verstanden, welches im unverformten Ausgangszustand biegeschlaff ist, das heißt nur in den zwei Raumrichtungen, in denen sich das flächige Gebilde erstreckt, Zugkräfte aufnehmen kann, aber keine Druckkräfte und keine Biegemomente aufnehmen kann. Insbesondere ist eine solche Folie im unverformten Ausgangszustand nicht formsteif.

Die mittlere Materialstärke einer solchen Folie ist deutlich kleiner als deren Länge und Breite, insbesondere kleiner als 5 % der Länge und/oder kleiner als 5 % der Breite.

Im Gegensatz hierzu weist ein als Spritzgießteil hergestelltes Abdeckelement eine deutlich größere mittlere Wandstärke auf, da die Wandstärke bei Spritzgießteilen unter Berücksichtigung des Fließverhaltens des geschmolzenen Spritzgießmaterials in der Spritzgießform nicht beliebig reduziert werden kann.

Der mindestens eine Zellverbinder ist bei von dem Trägerelement abgenommenem Abdeckelement für Montage-, Wartungs- oder Reparaturzwecke zugänglich.

Bei der Montage der elektrochemischen Vorrichtung wird das Abdeckelement, vorzugsweise lösbar, an dem Trägerelement festgelegt, so dass der aus dem Abdeckelement und dem Trägerelement gebildete Deckel als eine zusammenhängende Baugruppe leicht handhabbar ist.

Die elektrochemische Vorrichtung kann dabei ein oder mehrere elektrochemische Module umfassen.

Unter einem "Deckel" für eine elektrochemische Vorrichtung ist in dieser Beschreibung und in den beigefügten Ansprüchen jedes Element zu verstehen, das zur Abdeckung zumindest eines Teils der elektrochemischen Vorrichtung vorgesehen ist. Bei dem abgedeckten Teil kann es sich dabei insbesondere um ein elektrochemisches Modul der elektrochemischen Vorrichtung oder aber auch nur um einen Teil eines elektrochemischen Moduls handeln.

Das Abdeckelement ist vorzugsweise als ein Tiefziehteil ausgebildet.

Alternativ oder ergänzend hierzu kann vorgesehen sein, dass das Abdeckelement durch ein Thermoforming-Verfahren oder ein In-Mould-Forming-Verfahren hergestellt ist.

Das Thermoforming-Verfahren oder Thermoformen ist ein Verfahren zur Umformung thermoplastischer Kunststoffe, das auch als Warmformen, Tiefziehen oder Vakuumtiefziehen bezeichnet wird. Beim Thermoformen von Folien (bis zu einer Materialstärke von ungefähr 1,5 mm) können die umzuformenden Folien-Halbzeuge von einer Rolle einem Thermoformautomaten zugeführt werden.

Bei einer möglichen Ausführungsform des Thermoformens wird die Folie in einer Aufwärmstation mittels Heizstrahlern ein- oder beidseitig erwärmt. In einer Werkzeugstation wird die Folie mittels eines Spannrahmens festgehalten. Ein Vorstrecker und ein Thermoformwerkzeug fahren durch die Folienebene hindurch und geben die zu erzeugende Kontur grob vor. Dann wird die Folie von der einen Seite mit Druckluft und von der anderen Seite mit Vakuum beaufschlagt, um die Folie rasch an die (beispielsweise wassergekühlte) Wandung eines Formwerkzeuges zu bringen. Durch Löcher oder Schlitze entweicht die Luft zwischen der Folie und dem Formwerkzeug. Die erkaltete, nun feste umgeformte Folie wird von dem Formwerkzeug getrennt und einer Ausstanzstation zugeführt. Dort werden die Außenmaße und gegebenenfalls auch Löcher in das fertige Werkstück gestanzt. Anschließend wird das fertig umgeformte Werkstück der Thermoformmaschine entnommen und beispielsweise gestapelt und/oder verpackt.

Um eine ausreichende mechanische Steifigkeit des Abdeckelements zu erreichen, kann das Abdeckelement mit mindestens einer Versteifungssicke und/oder mit mindestens einer Verstärkungsrippe versehen sein.

Zur, vorzugsweise lösbaren, Verbindung des Abdeckelements mit dem Trägerelement des Deckels ist es günstig, wenn das Abdeckelement einen zu dem Trägerelement hin vorstehenden Randbereich umfasst, an welchem das Abdeckelement mit dem Trägerelement verbunden ist.

Besonders günstig ist es dabei, wenn der Randbereich des Abdeckelements einen zu dem Abdeckelement hin vorstehenden Randbereich des Trägerelements zumindest teilweise übergreift.

Der Randbereich des Abdeckelements kann beispielsweise mittels eines als Spannrahmen ausgebildeten Spannelements an dem Trägerelement festgelegt, insbesondere an das Trägerelement angeklemmt, sein.

Dabei ist das Spannelement vorzugsweise auf der dem Trägerelement abgewandten Seite des Abdeckelements, insbesondere an einer dem Trägerelement abgewandten Außenseite des Abdeckelements, angeordnet.

Alternativ oder ergänzend hierzu kann vorgesehen sein, dass das Abdeckelement mit dem Trägerelement verrastet ist.

Vorzugsweise ist das Abdeckelement mit dem Trägerelement mittels einer Rastvorrichtung verrastbar, welche ein oder mehrere an dem Abdeckelement vorgesehene Rastelemente und ein oder mehrere an dem Trägerelement vorgesehene Rastelemente umfasst.

Bei einer bevorzugten Ausgestaltung der Erfindung ist vorgesehen, dass das Abdeckelement ein thermoplastisches Material, insbesondere Polypropylen, umfasst.

Besonders günstig ist es, wenn das Abdeckelement im Wesentlichen vollständig aus einem thermoplastischen Material, insbesondere aus Polypropylen, gebildet ist.

Die Abdeckfolie weist vorzugsweise eine mittlere Materialstärke von höchstens ungefähr 1,5 mm, insbesondere von höchstens ungefähr 1,0 mm, besonders bevorzugt von höchstens ungefähr 0,6 mm, auf.

Bei dem erfindungsgemäßen Deckel ist vorgesehen, dass der Deckel mindestens einen Zellverbinder zum elektrisch leitenden Verbinden eines ersten Zellterminals einer ersten elektrochemischen

Zelle der elektrochemischen Vorrichtung und eines zweiten Zellterminals einer zweiten elektrochemischen Zelle der elektrochemischen Vorrichtung umfasst.

Insbesondere kann vorgesehen sein, dass der Deckel mit den daran angeordneten Zellverbindern ein Zellkontaktierungssystem zum Kontaktieren der Zellterminals der elektrochemischen Vorrichtung bildet.

Um die Zellverbinder vor einer unbeabsichtigten Beschädigung zu schützen, ist mindestens ein Zellverbinder zwischen dem Trägerelement und dem Abdeckelement angeordnet.

Um den Zellverbinder in einfacher Weise mit einem Zellterminal einer elektrochemischen Zelle der elektrochemischen Vorrichtung, vorzugsweise stoffschlüssig, verbinden zu können, ist es von Vorteil, wenn das Trägerelement mindestens eine Durchtrittsöffnung aufweist, durch welche ein Kontaktbereich eines solchen Zellverbinders mit einem Zellterminal einer elektrochemischen Zelle der elektrochemischen Vorrichtung verbindbar ist.

Um elektrische Leitungen, insbesondere Spannungsabgriffsleitungen und Temperaturmessleitungen, welche zu den Zellverbindern der elektrochemischen Vorrichtung oder zu anderen Funktionselementen der elektrochemischen Vorrichtung führen, in besonders einfacher Weise an dem Deckel montieren zu können, ist es von Vorteil, wenn der Deckel mindestens ein Leitungssystem umfasst, wobei das Leitungssystem mindestens eine Leitung umfasst, die an einen Zellverbinder zum elektrisch leitenden Verbinden eines ersten Zellterminals einer ersten elektrochemischen Zelle und eines zweiten Zellterminals einer zweiten elektrochemischen Zelle der elektrochemischen Vorrichtung oder an ein anderes Funktionselement, insbesondere an einen Stromanschluss der elektrochemischen Vorrichtung, angeschlossen ist.

Besonders günstig ist es, wenn der Deckel mindestens ein Leitungssystem zum Verbinden einer Mehrzahl von Spannungsabgriffstellen und/oder Temperaturmessstellen der elektrochemischen Vorrichtung mit einer Überwachungseinheit der elektrochemischen Vorrichtung, welches mehrere Spannungsabgriffsleitungen und/oder mehrere Temperaturmessleitungen umfasst, umfasst. Auf diese Weise sind die mehreren Spannungsabgriffsleitungen und/oder die mehreren Temperaturmessleitungen schon vor dem, vorzugsweise stoffschlüssigen, Verbinden mit den Zellverbindern oder anderen Funktionselementen der elektrochemischen Vorrichtung als eine Einheit handhabbar.

Ein solches Leitungssystem kann insbesondere eine Versteifungsstruktur umfassen, an welcher die zu den Funktionselementen führenden elektrischen Leitungen, vorzugsweise lösbar, gehalten sind.

Die Versteifungsstruktur selbst kann wiederum an dem Trägerelement festgelegt oder aber einstückig mit dem Trägerelement ausgebildet sein.

Ein besonders guter Schutz der Leitungen des Leitungssystems des Deckels wird erreicht, wenn das Leitungssystem zwischen dem Trägerelement und dem Abdeckelement angeordnet ist.

Ferner ist es günstig, wenn der Deckel mindestens einen Durchtrittskanal zur Aufnahme eines Stromanschlusses der elektrochemischen Vorrichtung aufweist, mittels welchem die elektrochemische Vorrichtung mit anderen Vorrichtungen oder ein elektrochemisches Modul der Vorrichtung mit anderen elektrochemischen Modulen der Vorrichtung elektrisch leitend verbindbar ist.

Insbesondere kann vorgesehen sein, dass der Deckel mindestens zwei Durchtrittskanäle umfasst, welche zusammen einen ringförmig geschlossenen Durchtrittsschacht zur Aufnahme eines Stromanschlusses der elektrochemischen Vorrichtung bilden.

Dabei kann einer der Durchtrittskanäle an dem Trägerelement und ein anderer Durchtrittskanal an dem Abdeckelement angeordnet sein.

Der erfindungsgemäße Foliendeckel ermöglicht eine deutliche Reduzierung des Gewichts der elektrochemischen Vorrichtung.

Durch die Verwendung eines von einem Spritzgießverfahren verschiedenen Herstellungsverfahrens, insbesondere eines Thermoforming-Verfahrens oder eines In-Mould-Forming-Verfahrens (zur Herstellung von Hybrid-Teilen) wird eine im Verhältnis zu einem Spritzgießteil dünne Abdeckfolie herstellbar, welche einen Bestandteil des Abdeckelements oder aber im Wesentlichen das gesamte Abdeckelement des Deckels bildet.

Durch die Verarbeitung von sehr dünnen Folien als Abdeckelemente kann das Gewicht des Deckels und damit das Gesamtgewicht der elektrochemischen Vorrichtung deutlich reduziert werden.

Der erfindungsgemäße Deckel eignet sich insbesondere zur Verwendung in einer elektrochemischen Vorrichtung, welche mehrere elektrochemische Zellen und einen erfindungsgemäßen Deckel umfasst.

Eine solche elektrochemische Vorrichtung kann insbesondere als ein Akkumulator, beispielsweise als ein Lithium-Ionen-Akkumulator, ausgebildet sein.

Wenn die erfindungsgemäße elektrochemische Vorrichtung als ein Akkumulator ausgebildet ist, eignet sie sich insbesondere als eine hoch belastbare Energiequelle, beispielsweise für den Antrieb von Kraftfahrzeugen.

Durch die Gewichtsreduzierung der elektrochemischen Vorrichtung wird in diesem Fall eine Erhöhung der Reichweite des Kraftfahrzeugs erzielt.

Wenn die Abdeckfolie mit Versteifungsrippen versehen ist, so wird hiermit eine erhöhte mechanische Steifigkeit des Abdeckelements erzielt.

Die Befestigung der Abdeckfolie an einem Trägerelement des Deckels kann insbesondere mittels einer Rastvorrichtung erfolgen, welche in unterschiedlichsten Formen ausgeführt sein kann.

Das Thermoforming-Verfahren wird beispielsweise zur Herstellung von Blisterverpackungen angewandt.

Das Abdeckelement des erfindungsgemäßen Deckels kann insbesondere als ein thermoplastisches Verbundwerkstück ("thermoplastic advanced composite") und/oder als ein Hybrid-Kunststoffteil ausgebildet sein.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung eines Akkumulatormoduls mit einem Gehäuse, in dem mehrere elektrochemische Zellen angeordnet sind und das durch einen Deckel verschlossen ist, welcher ein Trägerelement und ein mit dem Trägerelement verbundenes Abdeckelement umfasst;
- Fig. 2: eine schematische perspektivische Explosionsdarstellung des Akkumulatormoduls aus Fig. 1, in welcher das Gehäuse des Akkumulatormoduls mit den darin angeordneten elektrochemischen Zellen, das Trägerelement mit daran angeordneten Zellverbindern und Leitungssystemen zum Verbinden von Spannungsabgriffstellen und Temperaturmessstellen der Zellverbinder mit mehrpoligen Anschlusssteckern und das Abdeckelement dargestellt sind; und
- Fig. 3: eine weitere schematische perspektivische Explosionsdarstellung des Trägerelements mit den darin angeordneten Zellverbindern und des Leitungssystems.

Gleiche oder funktional äquivalente Elemente sind in allen Figuren mit denselben Bezugszeichen bezeichnet.

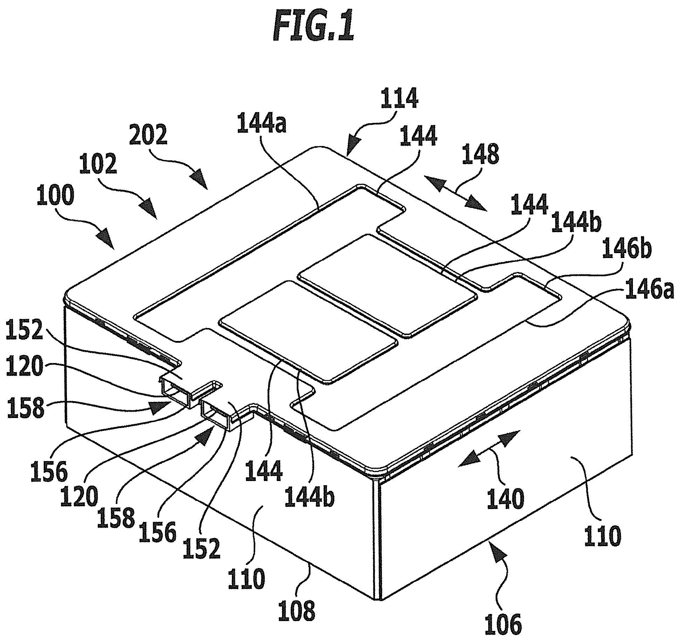

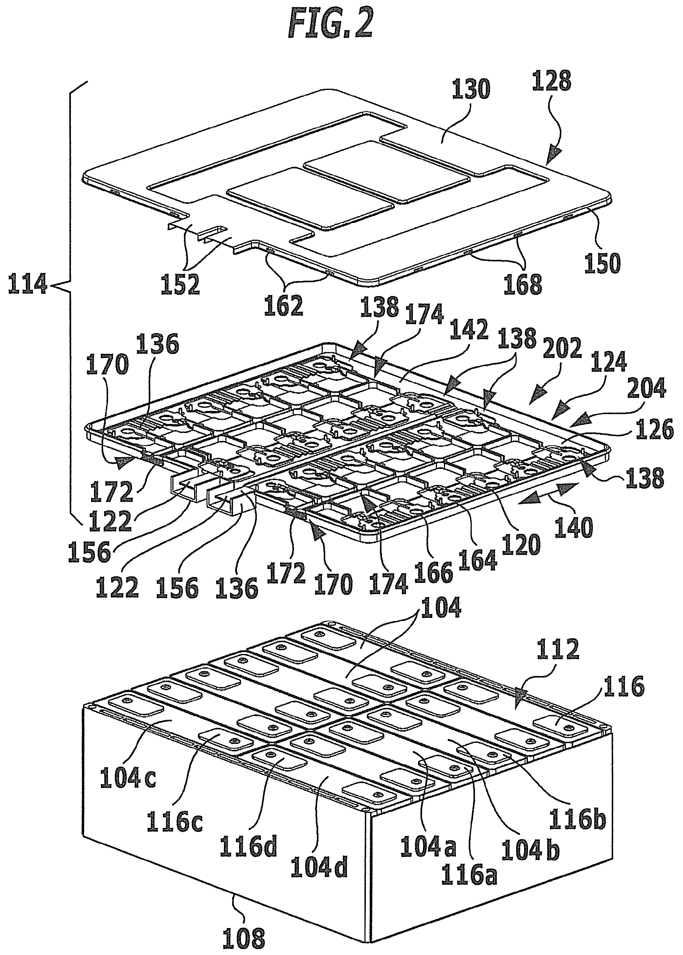

Eine als Ganzes mit 100 bezeichnete elektrochemische Vorrichtung umfasst beispielsweise mehrere elektrochemische Module 102, von denen jedes mehrere, im dargestellten Ausführungsbeispiel zwölf, elektrochemische Zellen 104 umfasst, welche nebeneinander in einem Gehäuse 106 des elektrochemischen Moduls 102 angeordnet sind (siehe die Fig. 1 und 2).

Das Gehäuse 106 kann beispielsweise im Wesentlichen quaderförmig ausgebildet sein und eine Bodenwand 108 und sich von der Bodenwand 108 weg erstreckende Seitenwände 110 umfassen, deren der Bodenwand 108 abgewandte Ränder eine Gehäuseöffnung 112 umgeben, die mittels eines Deckels 114 verschließbar ist.

Die elektrochemischen Zellen 104 sind in dem Gehäuse 106 des elektrochemischen Moduls 102 so angeordnet und ausgerichtet, dass die beiden Zellterminals 116 jeder elektrochemischen Zelle 104 auf der dem Deckel 114 zugewandten Seite der jeweiligen elektrochemischen Zelle 104 angeordnet sind.

Bei jeder elektrochemischen Zelle 104 bildet eines der Zellterminals 116 einen negativen Pol 118a und das jeweils andere Zellterminal 116 einen positiven Pol 118b der betreffenden elektrochemischen Zelle 104.

Die elektrochemische Vorrichtung 100 kann insbesondere als ein Akkumulator, insbesondere als ein Lithium-Ionen-Akkumulator, beispielsweise des Typs LiFePO₄, ausgebildet sein.

Die elektrochemischen Module 102 können entsprechend als Akkumulatormodule und die elektrochemischen Zellen 104 als Akkumulatorzellen, insbesondere als Lithium-Ionen-Akkumulatorzellen, beispielsweise vom Typ LiFePO₄, ausgebildet sein.

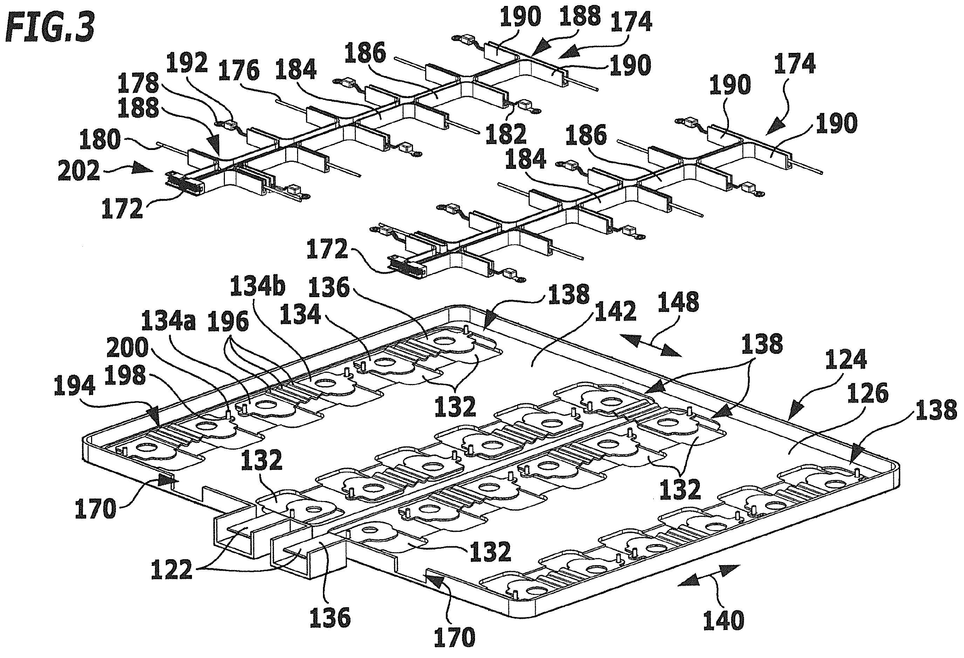

Das elektrochemische Modul 102 umfasst ferner mehrere Zellverbinder 120 (siehe insbesondere die Fig. 2 und 3), mittels welcher die Zellterminals 116 einander benachbarter elektrochemischer Zellen 104 mit unterschiedlicher Polarität elektrisch leitend miteinander verbindbar sind, um auf diese Weise alle elektrochemischen Zellen 104 eines elektrochemischen Moduls 102 elektrisch in Reihe zu schalten.

Dabei verbindet jeder Zellverbinder 120 ein erstes Zellterminal 116a negativer Polarität einer ersten elektrochemischen Zelle 104a mit einem zweiten Zellterminal 116b positiver Polarität einer benachbarten zweiten elektrochemischen Zelle 104b (siehe Fig. 2).

Jeweils ein Zellterminal 116c der den Anfang der Zellen-Reihenschaltung des elektrochemischen Moduls 102 bildenden elektrochemischen Zelle 104c und ein Zellterminal 116d der das Ende der Zellen-Reihenschaltung bildenden elektrochemischen Zelle 104d sind jeweils elektrisch leitend mit einem elektrisch leitenden Stromanschluss 122 des elektrochemischen Moduls 102 verbunden (siehe die Fig. 1 und 3).

Die mehreren elektrochemischen Module 102 der elektrochemischen Vorrichtung 100 sind vorzugsweise elektrisch in Reihe geschaltet.

Eine solche Reihenschaltung kann insbesondere dadurch hergestellt werden, dass ein elektrischer Stromanschluss 120 eines ersten elektrochemischen Moduls mittels eines (nicht dargestellten) Modulverbinders elektrisch leitend mit einem elektrischen Stromanschluss 120 (entgegengesetzter Polarität) eines zweiten elektrochemischen Moduls verbunden wird.

Der auf das Gehäuse 106 aufsetzbare und im montierten Zustand die Gehäuseöffnung 112 verschließende Deckel 114 ist im Einzelnen in den Fig. 2 und 3 dargestellt.

Der Deckel 114 umfasst ein Trägerelement 124, beispielsweise in Form einer vorzugsweise im Wesentlichen rechteckigen Trägerplatte 126, und ein an dem Trägerelement 124 gehaltenes Abdeckelement 128, in Form einer, vorzugsweise im Wesentlichen rechteckigen, Abdeckfolie 130.

Wie am Besten aus Fig. 3 zu ersehen ist, ist das Trägerelement 124 mit einer Mehrzahl von Durchtrittsöffnungen 132 versehen, wobei jede Zugangsöffnung 132 jeweils einem Kontaktbereich 134 eines Funktionselements 136 der elektrochemischen Vorrichtung 100, insbesondere des elektrochemischen Moduls 102, insbesondere jeweils einem Kontaktbereich 134 eines Zellverbinders 120 oder eines Stromanschlusses 122, und jeweils einem Zellterminal 116 der elektrochemischen Zellen 104 der elektrochemischen Vorrichtung 100, insbesondere des elektrochemischen Moduls 102, zugeordnet ist, so dass durch eine solche Durchtrittsöffnung 132 jeweils ein Zellterminal 116 mit einem zugeordneten Kontaktbereich 134 eines Funktionselements 136 verbindbar ist.

Dabei kann sich beispielsweise ein Zellterminal 116 durch die Durchtrittsöffnung 132 hindurch erstrecken, um in Kontakt mit einem Kontaktbereich 134 eines Funktionselements 136 zu kommen.

Alternativ hierzu kann sich auch ein Kontaktbereich 134 eines Funktionselements 136 durch die jeweils zugeordnete Durchtrittsöffnung 132 hindurch erstrecken, um in Kontakt mit dem jeweils zugeordneten Zellterminal 116 zu kommen.

Ferner ist auch denkbar, dass sich sowohl das Zellterminal 116 als auch der Kontaktbereich 134 des Funktionselements 136 beide in die Durchtrittsöffnung 132 hinein erstrecken und dort miteinander verbunden sind.

Wie aus den Fig. 2 und 3 zu ersehen ist, können die Durchtrittsöffnungen 132 des Trägerelements 124 in mehreren Reihen 138 angeordnet sein, wobei die Reihen 138 sich beispielsweise in einer Längsrichtung 140 des Trägerelements 124 erstrecken.

Die Durchtrittsöffnungen 132 können insbesondere im Wesentlichen rechteckig ausgebildet sein; grundsätzlich sind aber auch andere Formen der Durchtrittsöffnungen, insbesondere kreisförmige, ovale, quadratische oder polygonale, Durchtrittsöffnungen 132 möglich.

An der im montierten Zustand des Deckels 114 den elektrochemischen Zellen 104 abgewandten Außenseite 142 des Trägerelements 124 ist das Abdeckelement 128 angeordnet, welches zum Abdecken der Funktionselemente 136, insbesondere der Zellverbinder 120 und der Stromanschlüsse 122, dient.

Das Abdeckelement 128 ist in Form einer Folie ausgebildet und weist eine mittlere Materialstärke von höchstens ungefähr 1,5 mm auf.

Um Material und Gewicht einzusparen, ist vorzugsweise vorgesehen, dass die mittlere Materialstärke des Abdeckelements 128 vorzugsweise höchstens ungefähr 1,0 mm, insbesondere höchstens ungefähr 0,6 mm, beträgt.

Das Abdeckelement 128 ist vorzugsweise als ein Tiefziehteil ausgebildet.

Insbesondere kann das Abdeckelement 128 durch eines der Herstellungsverfahren Thermoforming oder In-Mould-Forming hergestellt sein.

Das Thermoforming-Verfahren oder Thermoformen ist ein Verfahren zur Umformung thermoplastischer Kunststoffe, das auch als Warmformen, Tiefziehen oder Vakuumtiefziehen bezeichnet wird. Beim Thermoformen von Folien (bis zu einer Materialstärke von ungefähr 1,5 mm) können die umzuformenden Folien-Halbzeuge von einer Rolle einem Thermoformautomaten zugeführt werden.

Bei einer möglichen Ausführungsform des Thermoformens wird die Folie in einer Aufwärmstation mittels Heizstrahlern ein- oder beidseitig erwärmt. In einer Werkzeugstation wird die Folie mittels eines Spannrahmens festgehalten. Ein Vorstrecker und ein Thermoformwerkzeug fahren durch die Folienebene hindurch und geben die zu erzeugende Kontur grob vor. Dann wird die Folie von der einen Seite mit Druckluft und von der anderen Seite mit Vakuum beaufschlagt, um die Folie rasch an die (beispielsweise wassergekühlte) Wandung eines Formwerkzeuges zu bringen. Durch Löcher oder Schlitze entweicht die Luft zwischen der Folie und dem Formwerkzeug. Die erkaltete, nun feste umgeformte Folie wird von dem Formwerkzeug getrennt und einer Ausstanzstation zugeführt. Dort werden die Außenmaße und gegebenenfalls auch Löcher in das fertige Werkstück gestanzt. Anschließend wird das fertig umgeformte Werkstück der Thermoformmaschine entnommen und beispielsweise gestapelt und/oder verpackt.

Das Abdeckelement umfasst vorzugsweise ein thermoplastisches Material, insbesondere Polypropylen.

Vorzugsweise ist das Abdeckelement im Wesentlichen vollständig aus einem thermoplastischen Material, insbesondere aus Polypropylen, gebildet.

Um eine ausreichende mechanische Steifigkeit des Abdeckelements 128 zu erreichen, kann das Abdeckelement 128 mit Versteifungssicken 144 und/oder mit Verstärkungsrippen versehen sein.

Die Versteifungssicken 144 sind vorzugsweise ringförmig geschlossen ausgebildet.

Jede Versteifungssicke 144 kann Abschnitte 146a umfassen, welche beispielsweise im Wesentlichen parallel zur Längsrichtung 140 des Trägerelements 124 und des Abdeckelements 128 ausgerichtet sind, und Abschnitte 146b, welche beispielsweise im Wesentlichen parallel zu einer Querrichtung 148 des Trägerelements 124 und des Abdeckelements 128 ausgerichtet sind, wobei die Querrichtung 148 im Wesentlichen senkrecht zur Längsrichtung 140 verläuft.

Wie aus den Fig. 1 und 2 zu ersehen ist, kann insbesondere vorgesehen sein, dass mindestens eine äußere Versteifungssicke 144a eine oder mehrere innerhalb der Versteifungssicke 144 liegende Versteifungssicken 144b einschließt.

Wie aus den Fig. 1 und 2 zu ersehen ist, ist das Abdeckelement 128 ferner vorzugsweise mit einem längs seines äußeren Randes umlaufenden, im montierten Zustand des Deckels 114 zu dem Trägerelement 124 hin vorstehenden Randbereich 150 versehen.

Der Randbereich 150 kann von zwei Durchtrittskanälen 152 unterbrochen sein, welche vom Rand des Abdeckelements 128, beispielsweise in der Längsrichtung 140, nach außen vorstehen und beispielsweise einen im Wesentlichen U-förmigen Querschnitt aufweisen können.

Wie am Besten aus Fig. 2 zu ersehen ist, ist auch das Trägerelement 124 vorzugsweise mit einem längs seines äußeren Randes umlaufenden, im montierten Zustand des Deckels 114 zu dem Abdeckelement 128 hin vorstehenden Randbereich 154 versehen.

Auch der Randbereich 154 des Trägerelements 124 kann von zwei Durchtrittskanälen 156 unterbrochen sein, welche vom Rand des Trägerelements 124, vorzugsweise in der Längsrichtung 140, nach außen vorstehen und beispielsweise einen im Wesentlichen U-förmigen Querschnitt aufweisen können.

Die Durchtrittskanäle 156 des Trägerelements 124 und die Durchtrittskanäle 152 des Abdeckelements 128 sind an einander entsprechenden Stellen der jeweiligen Randbereiche 154 bzw. 150 angeordnet und mit ihren offenen Seiten einander zugewandt, so dass die Durchtrittskanäle 156, 152 zusammen einen Durchtrittsschacht 158 bilden, welcher zur Aufnahme jeweils eines der Stromanschlüsse 122 des elektrochemischen Moduls 102 dient.

Jeder Stromanschluss 122 ist dabei im montierten Zustand des elektrochemischen Moduls 102 mit einem Zellterminal 116c der ersten elektrochemischen Zelle 104c der Reihenschaltung des elektrochemischen Moduls 102 bzw. mit einem Zellterminal 116d der letzten elektrochemischen Zelle 104d der Reihenschaltung des elektrochemischen Moduls 102 verbunden.

Um das Abdeckelement 128 lösbar an dem Trägerelement 124 festlegen zu können, ist vorzugsweise eine Rastvorrichtung 160 vorgesehen, welche ein oder mehrere an dem Abdeckelement 128 vorgesehene Rastelemente 162 und ein oder mehrere an dem Trägerelement 124 vorgesehene Rastelemente 164 umfasst.

Wie aus Fig. 2 zu ersehen ist, kann das trägerelementseitige Rastelement 164 beispielsweise als ein an dem Abdeckelement 128 zugewandten Rand des Randbereichs 154 des Trägerelements 124 umlaufender, nach außen vorspringender Rastwulst 166 ausgebildet sein.

Die abdeckelementseitigen Rastelemente 162 können beispielsweise als mehrere in der Umfangsrichtung des Abdeckelements 128 aufeinanderfolgende, von dem Randbereich 150 des Abdeckelements 128 nach innen vorspringende Rastvorsprünge 168 ausgebildet sein.

Wenn das Abdeckelement 128 von oben auf das Trägerelement 124 aufgesetzt wird, gelangen die Rastvorsprünge 168 unter elastischer Verformung des Randbereichs 150 des Abdeckelements 128 und/oder des Rastwulstes 166 des Trägerelements 124 an dem Rastwulst 166 vorbei und rasten unterhalb des Rastwulstes 166 ein, so dass das Abdeckelement 128 durch Verrastung an dem Trägerelement 124 gesichert ist.

Selbstverständlich können die Rastelemente 162 am Abdeckelement 128 und die Rastelemente 162 am Trägerelement 124 auch in jeder beliebigen anderen Weise ausgebildet sein, sofern sie nur eine gegenseitige Verrastung von Abdeckelement 128 und Trägerelement 124 ermöglichen.

Die Rastelemente 162 des Abdeckelements 128 können in das Abdeckelement 128 eingeformt oder eingeprägt oder an das Abdeckelement 128 eingeformt sein.

Das Trägerelement 124 ist in seinem Randbereich 154 vorzugsweise mit einer oder mehreren Ausnehmungen 170 zur Aufnahme jeweils eines, vorzugsweise mehrpoligen, Steckers 172 versehen.

Jeder Stecker 172 dient zum Anschließen eines an dem Trägerelement 124 angeordneten Leitungssystems 174 an eine (nicht dargestellte) Überwachungseinheit der elektrochemischen Vorrichtung 100 über eine (nicht dargestellte), vorzugsweise mehrpolige, Verbindungsleitung.

Bei der in den Figuren dargestellten Ausführungsform eines elektrochemischen Moduls 102 sind zwei solche Leitungssysteme 174 vorhanden.

Jedes der Leitungssysteme 174 dient zum Verbinden einer Mehrzahl von Spannungsabgriffstellen 176 und einer Mehrzahl von Temperaturmessstellen 178 des elektrochemischen Moduls 102 mit der (nicht dargestellten) Überwachungseinheit der elektrochemischen Vorrichtung 100.

Jedes Leitungssystem 174 umfasst mehrere Spannungsabgriffsleitungen 180, welche von jeweils einer Spannungsabgriffstelle 176 zu dem Stecker 172 des Leitungssystems 174 führen, und mehrere Temperaturmessleitungen 182, welche von jeweils einer Temperaturmessstelle 178 zu dem Stecker 172 des Leitungssystems 174 führen, sowie eine Versteifungsstruktur 184, an welcher die Spannungsabgriffsleitungen 180 und die Temperaturmessleitungen 182 zumindest abschnittsweise angeordnet sind.

Die Versteifungsstruktur 184 jedes Leitungssystems 174 ist vorzugsweise baumartig aufgebaut und umfasst einen Hauptaufnahmekanal 186, welcher sich beispielsweise in der Längsrichtung 140 des Deckels 114 erstreckt, und mehrere an Verzweigungsstellen 188 von dem Hauptaufnahmekanal 186 abzweigende Nebenaufnahmekanäle 190.

Dabei ist insbesondere vorgesehen, dass der Hauptaufnahmekanal 186 mehrere Spannungsabgriffsleitungen 180 und Temperaturmessleitungen 182 des Leitungssystems 174 aufnimmt, während vorzugsweise jeder der Nebenaufnahmekanäle 190 jeweils nur eine Spannungsabgriffsleitung 180 und/oder nur eine Temperaturmessleitung 182 aufnimmt.

Der Hauptaufnahmekanal 186 und/oder die Nebenaufnahmekanäle 190 weisen vorzugsweise einen im Wesentlichen U-förmigen Querschnitt auf, der sich zu der dem Trägerelement 124 abgewandten Seite der Versteifungsstruktur 184 hin öffnet, so dass die Spannungsabgriffsleitungen 180 und die Temperaturmessleitungen 182 von dieser Seite her in die Versteifungsstruktur 184 eingebracht werden können.

Die Versteifungsstruktur 184 ist vorzugsweise einstückig ausgebildet und kann insbesondere ein spritzgießfähiges Material, beispielsweise PBT (Polybutylenterephthalat), PP (Polypropylen), PA (Polyamid), ABS (Acrylnitril-Butadien-Styrol) und/oder LCP ("Liquid Crystal Polymer") umfassen.

Alternativ oder ergänzend hierzu kann auch vorgesehen sein, dass die Versteifungsstruktur 184 ein metallisches Material, beispielsweise Aluminium, umfasst und insbesondere als ein metallisches Umformteil, beispielsweise ein Stanz-Biege-Teil, ausgebildet ist.

Die Versteifungsstruktur 184 kann eine oder mehrere Halteeinrichtungen umfassen, durch welche die Spannungsabgriffsleitungen 180 und die Temperaturmessleitungen 182, vorzugsweise lösbar, an der Versteifungsstruktur 184 festgelegt sind.

Solche Halteeinrichtungen können beispielsweise als Haken, Klammern, Rastelemente, Clipse oder Ähnliches ausgebildet sein, welche an der Versteifungsstruktur 184 und/oder an den Leitungen 180 oder 182 angeordnet sind.

Jede Versteifungsstruktur 184 eines Leitungssystems 174 kann wiederum als Ganzes, insbesondere lösbar, an der im montierten Zustand des Deckels 114 dem Abdeckelement 128 zugewandten Außenseite 142 des Trägerelements 124 festgelegt sein.

Die Festlegung der Versteifungsstruktur 184 an dem Trägerelement 124 kann beispielsweise durch Verrastung, Verschweißung und/oder Verklebung erfolgen.

Alternativ hierzu kann auch vorgesehen sein, dass die Versteifungsstruktur 184 einstückig mit dem Trägerelement 124 ausgebildet ist.

Das Ende jeder Spannungsabgriffsleitung 180 ist elektrisch leitend an jeweils einen Kontaktbereich 134 eines Zellverbinders 120 oder eines

Stromanschlusses 122 des elektrochemischen Moduls 102 angeschlossen, um das dort jeweils herrschende elektrische Potential abgreifen zu können.

Das Ende jeder Temperaturmessleitung 182 ist an jeweils einen Temperatursensor 192, beispielsweise in Form eines NTC-Elements ("Negative Temperature Coefficient"), angeschlossen. Jeder Temperatursensor 194 steht ebenfalls in Kontakt mit einem Kontaktbereich 134 eines Zellverbinders 120 oder mit einem Stromanschluss 122 des elektrochemischen Moduls 102, um die dort herrschende Temperatur messen zu können.

Jeder der Kontaktbereiche 134 der Zellverbinder 120 und jeder Stromanschluss 122 ist jeweils einem Zellterminal 114 des elektrochemischen Moduls 102 zugeordnet und im montierten Zustand des elektrochemischen Moduls 102 elektrisch leitend, vorzugsweise stoffschlüssig, mit dem jeweils zugeordneten Zellterminal 114 verbunden.

Jeder Zellverbinder 120 umfasst zwei Kontaktbereiche 134a und 134b zum elektrischen Kontaktieren von jeweils einem Zellterminal 114 und einen die beiden Kontaktbereiche 134a und 134b miteinander verbindenden Kompensationsbereich 194. Der Kompensationsbereich 194 ist vorzugsweise elastisch und/oder plastisch verformbar, um eine Relativbewegung der beiden Kontaktbereiche 134a und 134b des Zellverbinders 120 relativ zueinander im Betrieb der elektrochemischen Vorrichtung 100 und/oder zum Toleranzausgleich bei der Montage der elektrochemischen Vorrichtung 100 zu ermöglichen.

Zu diesem Zweck kann der Kompensationsbereich 194 insbesondere ein oder mehrere quer zu einer Verbindungsrichtung, welche ein Zentrum des ersten Kontaktbereichs 134a und ein Zentrum des zweiten Kontaktbereichs 134b des Zellverbinders 120 miteinander verbindet, verlaufende Kompensationswellen 196 aufweisen.

Jeder Kontaktbereich 134 der Zellverbinder 120 und die Stromanschlüsse 122 können mittels jeweils eines Positionierungsloches 198 an einem jeweils zugeordneten Positionierungsstift 200 des Trägerelements 124 positioniert sein. Dabei durchsetzt vorzugsweise der Positionierungsstift 200 des Trägerelements 124 das jeweils zugeordnete Positionierungsloch 198 des Zellverbinders 120 bzw. des Stromanschlusses 122.

Der Deckel 114 des elektrochemischen Moduls 102, welcher das Trägerelement 124 einschließlich der Leitungssysteme 174 und der Funktionselemente 136 sowie das Abdeckelement 128 umfasst, bildet ein Zellkontaktierungssytem 202 zur Kontaktierung und Überwachung der elektrochemischen Zellen 104 des elektrochemischen Moduls 102.

Das Trägerelement 124 umfasst vorzugsweise ein elektrisch nicht leitendes Kunststoffmaterial, beispielsweise PBT, PP, PA, ABS und/oder LCP, und ist vorzugsweise im Wesentlichen vollständig aus einem solchen Kunststoffmaterial gebildet.

Ein besonders geeignetes Material für das Trägerelement 124 ist ein mit Talkum verstärktes Polypropylen-Material (beispielsweise das Material mit der Bezeichnung PP TV20). Dieses Material weist durch die Talkumverstärkung eine besonders hohe Formstabilität auf.

Das Trägerelement 124 und die Leitungssysteme 174 sowie die Zellverbinder 120 und Stromanschlüsse 122 werden vorzugsweise als separate Baugruppe 204 komplett vormontiert.

Bei dieser Vormontage werden die Zellverbinder 120 und Stromanschlüsse 122 an dem Trägerelement 124 positioniert, und die Spannungsabgriffsleitungen 180 und Temperaturmessleitungen 182 werden mit den Zellverbindern 120 und den Stromanschlüssen 122 sowie mit den Steckern 172 verbunden und an den Versteifungsstrukturen 184 der Leitungssysteme 174, vorzugsweise lösbar, festgelegt.

Wenn die Versteifungsstrukturen 184 nicht ohnehin bereits mit dem Trägerelement 124, beispielsweise einstückig, verbunden sind, werden ferner die Versteifungsstrukturen 184 an der Außenseite 142 des Trägerelements 124 festgelegt.

Somit sind alle für die Kontaktierung der elektrochemischen Zellen 104 eines elektrochemischen Moduls 102 benötigten Bauteile in einer als Einheit handhabbaren Baugruppe 204, bereits in der erforderlichen relativen Positionierung, zusammengefasst.

Die Zellverbinder 120, die Stromanschlüsse 122 und/oder die Versteifungsstrukturen 184 der Leitungssysteme 174 können insbesondere durch Verrastung, Verschweißung und/oder Verklipsung an dem Trägerelement 124 festgelegt sein.

Das Trägerelement 124 des Deckels 114 wird bei der Montage eines elektrochemischen Moduls 102 auf das Gehäuse 106 aufgesetzt, in welchem die elektrochemischen Zellen 104 angeordnet sind, und mit dem die Gehäuseöffnung 110 umgebenden Rand des Gehäuses 106 verbunden.

Anschließend werden die Funktionselemente 136, insbesondere die Zellverbinder 120 und die Stromanschlüsse 122, elektrisch leitend mit den jeweils zugeordneten Zellterminals 114 des elektrochemischen Moduls 102 kontaktiert, beispielsweise durch Verschweißung, insbesondere mittels eines Lasers, und zwar durch die bei noch nicht aufgesetztem Abdeckelement 128 frei zugänglichen Durchtrittsöffnungen 132 des Trägerelements 124 hindurch.

Nach erfolgter Kontaktierung zwischen den Funktionselementen 136 und den Zellterminals 114 der elektrochemischen Zellen 104 des elektrochemischen Moduls 102 wird das Abdeckelement 128 auf das Trägerelement 124 aufgesetzt und mit demselben verbunden, insbesondere durch Verrastung, so dass das Abdeckelement 128 die Funktionselemente 136 und die Durchtrittsöffnungen 132 des Trägerelements 124 sowie die Leitungssysteme 174 abdeckt und vor einer ungewollten Berührung schützt.

Hierdurch wird eine Beschädigung des Zellkontaktierungssystems 202 während des Transports und der Montage des elektrochemischen Moduls 102 verhindert.

Das fertig montierte elektrochemische Modul 102 kann mit mehreren anderen elektrochemischen Modulen 102 zu der elektrochemischen Vorrichtung 100 zusammengesetzt werden, wobei insbesondere verschiedene elektrochemische Module 102 mittels (nicht dargestellter) Modulverbinder, welche die Stromanschlüsse 122 verschiedener elektrochemischer Module 102 miteinander verbinden, zusammengeschaltet werden können.

## Patentansprüche

1. Deckel für eine elektrochemische Vorrichtung (100), die mehrere elektrochemische Zellen (104) umfasst, umfassend
ein Trägerelement (124), an dem mindestens ein Zellverbinder (120) zum elektrisch leitenden Verbinden eines ersten Zellterminals (116a) einer ersten elektrochemischen Zelle (104a) und eines zweiten Zellterminals (116b) einer zweiten elektrochemischen Zelle (104b) angeordnet ist, und
ein Abdeckelement (128) zum Abdecken des mindestens einen Zellverbinders (120),
wobei das Abdeckelement (128) eine Abdeckfolie (130) umfasst,
**dadurch gekennzeichnet,**
**dass** mindestens ein Zellverbinder (120) zwischen dem Trägerelement (124) und dem Abdeckelement (128) angeordnet ist.

2. Deckel nach Anspruch 1, **dadurch gekennzeichnet, dass** das Abdeckelement (128) als ein Tiefziehteil ausgebildet ist.

3. Deckel nach einem der Ansprüche 1 oder 2, **dadurch gekennzeichnet, dass** das Abdeckelement (128) durch ein Thermoforming-Verfahren oder ein In-Mould-Forming-Verfahren hergestellt ist.

4. Deckel nach einem der Ansprüche 1 bis 3, **dadurch gekennzeichnet, dass** das Abdeckelement (128) mit mindestens einer Versteifungssicke (144) und/oder mit mindestens einer Verstärkungsrippe versehen ist.

5. Deckel nach einem der Ansprüche 1 bis 4, **dadurch gekennzeichnet, dass** das Abdeckelement (128) einen zu dem Trägerelement (124) hin vorstehenden Randbereich (150) umfasst, an welchem das Abdeckelement (128) mit dem Trägerelement (124) verbunden ist.

6. Deckel nach Anspruch 5, **dadurch gekennzeichnet, dass** der Randbereich (150) des Abdeckelements (128) einen zu dem Abdeckelement (128) hin vorstehenden Randbereich (154) des Trägerelements (124) zumindest teilweise übergreift.

7. Deckel nach einem der Ansprüche 1 bis 6, **dadurch gekennzeichnet, dass** das Abdeckelement (128) mit dem Trägerelement (124) verrastet ist.

8. Deckel nach einem der Ansprüche 1 bis 7, **dadurch gekennzeichnet, dass** das Abdeckelement (128) ein thermoplastisches Material umfasst.

9. Deckel nach einem der Ansprüche 1 bis 8, **dadurch gekennzeichnet, dass** das Abdeckelement (128) eine mittlere Materialstärke von höchstens ungefähr 1,5 mm aufweist.

10. Deckel nach einem der Ansprüche 1 bis 9, **dadurch gekennzeichnet, dass** das Trägerelement (124) mindestens eine Durchtrittsöffnung (132) aufweist, durch welche ein Kontaktbereich (134) eines Zellverbinders (120) mit einem Zellterminal (116) einer elektrochemischen Zelle (104) der elektrochemischen Vorrichtung (100) verbindbar ist.

11. Deckel nach einem der Ansprüche 1 bis 10, **dadurch gekennzeichnet, dass** der Deckel (114) mindestens ein Leitungssystem (174) zum Verbinden einer Mehrzahl von Spannungsabgriffstellen (176) und/oder Temperaturmessstellen (178) der elektrochemischen Vorrichtung (100) mit einer Überwachungseinheit der elektrochemischen Vorrichtung (100), welches mehrere Spannungsabgriffsleitungen (180) und/oder mehrere Temperaturmessleitungen (182) umfasst, umfasst.

12. Deckel nach Anspruch 11, **dadurch gekennzeichnet, dass** das Leitungssystem (174) zwischen dem Trägerelement (124) und dem Abdeckelement (128) angeordnet ist.

13. Deckel nach einem der Ansprüche 1 bis 12, **dadurch gekennzeichnet, dass** der Deckel (114) mindestens einen Durchtrittskanal (152, 156) zur Aufnahme eines Stromanschlusses (122) der elektrochemischen Vorrichtung (100) aufweist.

## Claims

1. A cover for an electro-chemical device (100) which comprises a plurality of electro-chemical cells (104), comprising
a carrier element (124) on which there is arranged at least one cell connector (120) for connecting a first cell terminal (116a) of a first electro-chemical cell (104a) and a second cell terminal (116b) of a second electro-chemical cell (104b) in an electrically conductive manner, and
a cover element (128) for covering the at least one cell connector (120), wherein the cover element (128) comprises a covering film (130), **characterised in that**
at least one cell connector (120) is arranged between the carrier element (124) and the cover element (128).

2. A cover in accordance with Claim 1, **characterised in that** the cover element (128) is in the form of a deep-drawn part.

3. A cover in accordance with either of the Claims 1 or 2, **characterised in that** the cover element (128) is manufactured by a thermoforming process or an in-mould-forming-process.

4. A cover in accordance with any of the Claims 1 to 3, **characterised in that** the cover element (128) is provided with at least one stiffening channel (144) and/or with at least one reinforcing rib.

5. A cover in accordance with any of the Claims 1 to 4, **characterised in that** the cover element (128) comprises an edge region (150) which projects towards the carrier element (124) and at which the cover element (128) is connected to the carrier element (124).

6. A cover in accordance with Claim 5, **characterised in that** the edge region (150) of the cover element (128) at least partly overlaps an edge region (154) of the carrier element (124) which projects towards the cover element (128).

7. A cover in accordance with any of the Claims 1 to 6, **characterised in that** the cover element (128) is latched to the carrier element (124).

8. A cover in accordance with any of the Claims 1 to 7, **characterised in that** the cover element (128) comprises a thermoplastic material.

9. A cover in accordance with any of the Claims 1 to 8, **characterised in that** the cover element (128) has an average material thickness of at most approximately 1.5 mm.

10. A cover in accordance with any of the Claims 1 to 9, **characterised in that** the carrier element (124) has at least one passage opening (132) through which a contact region (134) of a cell connector (120) is connectable to a cell terminal (116) of an electro-chemical cell (104) of the electro-chemical device (100).

11. A cover in accordance with any of the Claims 1 to 10, **characterised in that** the cover (114) comprises at least one conduit system (174) for connecting a plurality of voltage tapping points (176) and/or temperature measuring points (178) of the electro-chemical device (100) to a monitoring unit of the electro-chemical device (100), which conduit system comprises multiple voltage tapping lines (180) and/or multiple temperature measuring lines (182).

12. A cover in accordance with Claim 11, **characterised in that** the conduit system (174) is arranged between the carrier element (124) and the cover element (128).

13. A cover in accordance with any of the Claims 1 to 12, **characterised in that** the cover (114) comprises at least one through channel (152, 156) for accommodating a power terminal (122) of the electro-chemical device (100).

## Revendications

1. Couvercle pour un dispositif électrochimique (100) comportant plusieurs cellules électrochimiques (104), comprenant
un élément support (124) sur lequel est disposé au moins un connecteur de cellules (120) pour la liaison électriquement conductrice d'un premier terminal de cellule (116a) d'une première cellule électrochimique (104a) et d'un deuxième terminal de cellule (116b) d'une deuxième cellule électrochimique (104b), et
un élément de couverture (128) pour le recouvrement dudit au moins un connecteur de cellules (120),
l'élément de couverture (128) comportant une feuille de couverture (130),
**caractérisé en ce qu'**au moins un connecteur de cellules (120) est disposé entre l'élément support (124) et l'élément de couverture (128).

2. Couvercle selon la revendication 1, **caractérisé en ce que** l'élément de couverture (128) est réalisé comme pièce emboutie.

3. Couvercle selon la revendication 1 ou 2, **caractérisé en ce que** l'élément de couverture (128) est fabriqué au moyen d'un procédé de thermoformage ou d'un procédé de formage en moule.

4. Couvercle selon l'une des revendications 1 à 3, **caractérisé en ce que** l'élément de couverture (128) est pourvu d'au moins une moulure de rigidification (144) et/ou d'au moins une nervure de renforcement.

5. Couvercle selon l'une des revendications 1 à 4, **caractérisé en ce que** l'élément de couverture (128) comporte une zone de bord (150) en saillie vers l'élément support (124), contre laquelle l'élément de couverture (128) est assemblé à l'élément support (124).

6. Couvercle selon la revendication 5, **caractérisé en ce que** la zone de bord (150) de l'élément de couverture (128) chevauche au moins partiellement une zone de bord (154) de l'élément support (124) en saillie vers l'élément de couverture (128).

7. Couvercle selon l'une des revendications 1 à 6, **caractérisé en ce que** l'élément de couverture (128) est enclenché avec l'élément support (124).

8. Couvercle selon l'une des revendications 1 à 7, **caractérisé en ce que** l'élément de couverture (128) comprend un matériau thermoplastique.

9. Couvercle selon l'une des revendications 1 à 8, **caractérisé en ce que** l'élément de couverture (128) présente une épaisseur moyenne de matériau d'environ 1,5 mm au plus.

10. Couvercle selon l'une des revendications 1 à 9, **caractérisé en ce que** l'élément support (124) comporte au moins une ouverture de passage (132) par laquelle une zone de contact (134) d'un connecteur de cellule (120) peut être raccordée à un terminal de cellule (116) d'une cellule électrochimique (104) du dispositif électrochimique (100).

11. Couvercle selon l'une des revendications 1 à 10, **caractérisé en ce que** ledit couvercle (114) comporte au moins un système de lignes (174) pour la connexion d'une pluralité de points de prise de tension (176) et/ou de points de mesure de température (178) du dispositif électrochimique (100) à une unité de surveillance du dispositif électrochimique (100), laquelle comprend plusieurs lignes de prise de tension (180) et/ou plusieurs lignes de mesure de température (182).

12. Couvercle selon la revendication 11, **caractérisé en ce que** le système de lignes (174) est disposé entre l'élément support (124) et l'élément de couverture (128).

13. Couvercle selon l'une des revendications 1 à 12, **caractérisé en ce que** le couvercle (114) comporte au moins un canal de passage (152, 156) pour la réception d'une connexion de courant (122) du dispositif électrochimique (100).
